# EUROPEAN PATENT SPECIFICATION

(11) **EP 3 626 904 B1**
(45) Date of publication and mention of the grant of the patent: **05.05.2021**
(21) Application number: 19199170.2
(22) Date of filing: 24.09.2019
(51) Int. Cl.: E04D 13/03, E04D 13/035, E05B 9/08, E05C 3/06, E05B 9/00, E05B 17/20

(54) **A ROOF WINDOW WITH AN IMPROVED LOCK CASING**
DACHFENSTER MIT VERBESSERTEM VERRIEGELUNGSGEHÄUSE
FENÊTRE DE TOIT COMPORTANT UN BOÎTIER DE VERROUILLAGE AMÉLIORÉ

(30) Priority: 24.09.2018 DK PA201870622
(43) Date of publication of application: 25.03.2020
(73) Proprietor: VKR Holding A/S, 2970 Hørsholm (DK)
(72) Inventor: Mikkelsen, Christian Munk, 2970 Hørsholm (DK)
(74) Representative: AWA Denmark A/S

(56) References cited:
- EP-A1- 2 947 221
- EP-A1- 3 269 902
- WO-A1-2012/034558
- CN-Y- 2 789 394

## Description

### Technical Field

The present invention relates to a roof window comprising a frame, a sash, and a locking assembly connecting the sash with the frame, in which the locking assembly is provided with at least one deformation section configured to allow the locking assembly to undergo plastic deformation when the roof window is subjected to a sudden, severe load change such as an impact, said at least one deformation section being provided in a lock casing of the locking assembly.

### Background Art

Windows installed in a roof are subjected to a number of varying load conditions over time. This is most often due to severe weather conditions, but may also be the result of incidents when people are working on the roof surface, e.g. fall accidents. Several efforts have been made to mitigate adverse effects on the roof window in the case of excess loads emanating for instance from impacts or other sudden changes of the load conditions have been suggested in the prior art, including the ones described and shown in published applications Nos EP 1 361 331 A2, US 2008/086960 A1 and KR 20120089053 A.

A further example is shown in WO 2010/009727 A1, in which the mounting brackets fastening the frame to the roof structure have been made amply stiff so as to be able to hold the window in place even under severe circumstances, such as tough weather. One downside is, however, that when the window is subjected to for instance an impact, the mounting brackets hold, but other parts of the window break and there is a risk that the window is inadvertently opened. This makes the above-described mounting bracket disadvantageous with respect to protection against sudden impacts following for instance a strong wind or incidents when people are working on the roof surface, e.g. fall accidents.

To address these problems, Applicant's published international application WO 2017/144064 A1 suggests a modified mounting bracket to absorb the forces during certain load conditions. While this solution has proven to function well, there is still room for improvement.

Another example of a prior art roof window having a locking device is found in EP 2 947 221 A1.

### Summary of Invention

With this background, it is therefore an object of the invention to provide a roof window by which it is possible to improve the security against damage of parts of the roof window and inadvertent opening of the sash.

This and further objects are achieved with a roof window of the kind mentioned in the introduction which is furthermore characterised in that said at least one deformation section includes at least one deformation slit adjoining an arcuate track in the lock casing.

The invention is based on the recognition that the undesired breaking of parts occurs at intersections between the sash and the frame in those cases in which the window is subjected to a sudden, severe load change, typically in the form of an impact. By the provision of predefined deformation sections in the locking assembly, it is ensured that the lock casing is able to yield in a controlled manner while maintaining the structural integrity of the window. The plastic deformation that the locking assembly undergoes in the case of a sudden, severe load change will absorb a major part of the energy. Thereby less strain is put on the remaining window structure, which in turn prevents the window from flying open and also protects other parts of the window structure.

Forming the deformation section(s) in the lock casing entails a number of advantages; first, the lock casing is traditionally made of a sturdy material such as steel and of sufficient dimensions such as to allow even substantial deformation without breaking. Second, the lock casing is easily replaceable as it is immediately accessible when opening the window. In its most common configuration, the lock casing is fastened to the sash of the roof window, typically by means of mechanical fastening means such as screws, thus making the replacement particularly safe and easy.

Preferably, two arcuate tracks are provided and at least one deformation slit is provided adjoining a first end of a respective one of said two arcuate tracks. More preferably, two deformation slits are provided adjoining a first end and a second end, respectively, of a respective one of said two arcuate tracks. Providing the deformation section as a deformation slit adjoining an actuate track in the lock casing provides for a mechanically reliable and simple solution which renders the locking assembly easy to manufacture and functions well in use. Thus, providing a locking assembly in which the lock casing comprises at least one arcuate track, and providing such a deformation slit in connection with one or both arcuate tracks allows for unimpeded operation of the locking assembly during normal use, but at the same time provides for well-defined deformation section(s) to be deformed controllably in the case of a sudden, severe load change such as an impact. The number and position of the deformation slit(s) in the lock casing may be chosen in dependence on a variety of parameters, including window size and weight, altitude of installation site, climate zone etc.

In further developments of the presently preferred embodiments, each deformation slit is substantially linear and has a predefined length and predefined width. This renders the manufacture of the lock casing particularly easy, since a linear slit is easily formed during production. The predefined length of each deformation slit may lie in the range 5 to 15 mm, preferably about 10 mm. The predefined width of each deformation slit may lie in the range 1 to 3 mm, preferably 1.5 to 2 mm, more preferably about 1.75 mm. Selecting values within these ranges has proven to render the lock casing sufficiently robust not to compromise normal operation, while at the same time ensuring that the deformation aimed at takes place in the case of a sudden load change.

In other further developments, each arcuate track has an outer radius and an inner radius measured from an aperture for a lock mechanism of the locking assembly and extends over an arc length with a central angle of approximately 45°. This configuration has proven to give optimum usage of the available space in the lock casing, as the dimensions of the lock casing are for obvious reasons limited by the restricted available space in a roof window. The deformation slits at a respective one of said two arcuate tracks may extend at an angle relative to each other substantially corresponding to the central angle of approximately 45° of the arcuate track in question.

Other presently preferred embodiments and further advantages will be apparent from the subsequent detailed description and drawings.

### Brief Description of Drawings

In the following description embodiments of the invention will be described with reference to the schematic drawings, in which
Fig. 1 is a perspective view of a prior art roof window;
Fig. 2 is a perspective view, on a larger scale, of a detail of a locking assembly of the prior art roof window of Fig. 1;
Fig. 3 is a perspective view of a detail of the roof window in an embodiment of the invention; and
Fig. 4 is a plan view of the detail of Fig. 3.

### Description of Embodiments

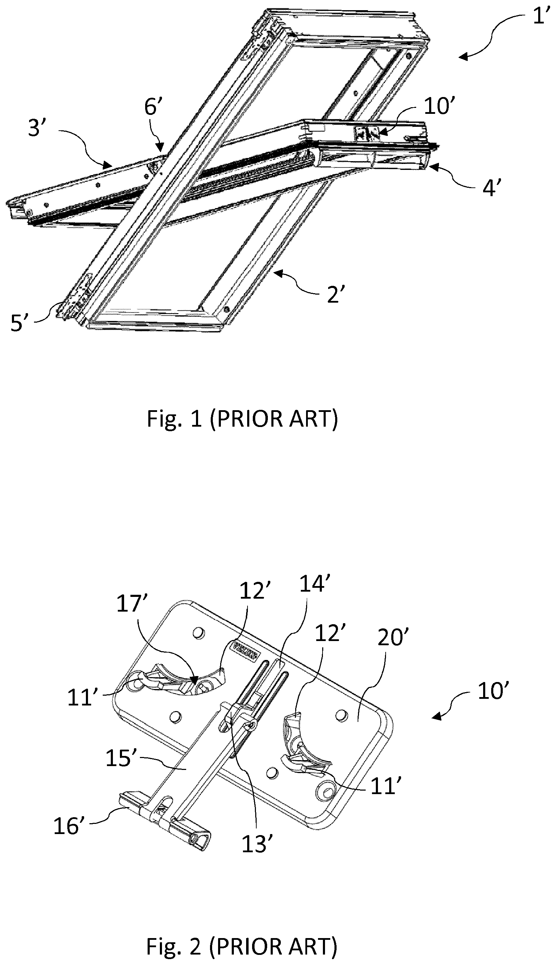

Fig. 1 shows a prior art roof window 1' adapted to be installed in a roof structure (not shown) by means of its stationary frame 2'. The roof window 1' is shown in an open position in which sash 3' forms an angle relative to the frame 2'. The sash 3' is hinged in the frame 2' by means of a set of hinges 6' and operated by means of an operating device 4' which in a manner known *per se* comprises a ventilation flap with a handle (not shown in detail). Fastening of the roof window 1' to the roof structure is carried out by means of a number of mounting brackets, here represented by mounting brackets 5' on the left-hand side as seen from the inside. Details regarding the mounting bracket 5' and the installation thereof may be found in Applicant's European patent application with the publication No. 2 578 763 A1. The mounting brackets 5' may also be formed as in the above-mentioned WO 2017/144064 A1. Finally, it is seen how the sash 3' is provided with a locking assembly generally designated 10' connected to the operating device 4' and configured to interact with a striking plate (not shown) provided on the frame 2' opposite to the locking assembly 10'.

The fundamental principles underlying the locking assembly and its interaction with the striking plate of the frame are well known in the art, and the configuration of such a locking assembly is for instance shown in Applicant's published European patent applications EP 1 873 336 A1, EP 2 607 578 A1, and EP 3 091 150 A1. With reference to the embodiments of these documents, Fig. 2 shows the prior art locking assembly 10' of the roof window 1' of Fig. 1 as comprising a set of pawl elements 11' movable in a respective arcuate track 12' in a casing 20' when an actuator slide 13' is moved in straight track 14' provided in the casing 20'. The actuator slide 13' is connected to operator arm 15' and operator hinge 16' which in turn is connected to the operating device 4' of the roof window 1'. A lock mechanism generally designated 17' is accommodated within the casing 20' and comprises a number of spring wires connected to the pawl elements 11'. Handling the operating device 4' will move the actuator slide 13' in its track 14' and in turn the pawl elements 11' in arcuate tracks 12' between a closed position, a ventilating position and an open position in which pawl elements 11' are released from engagement with the striking plate on the frame.

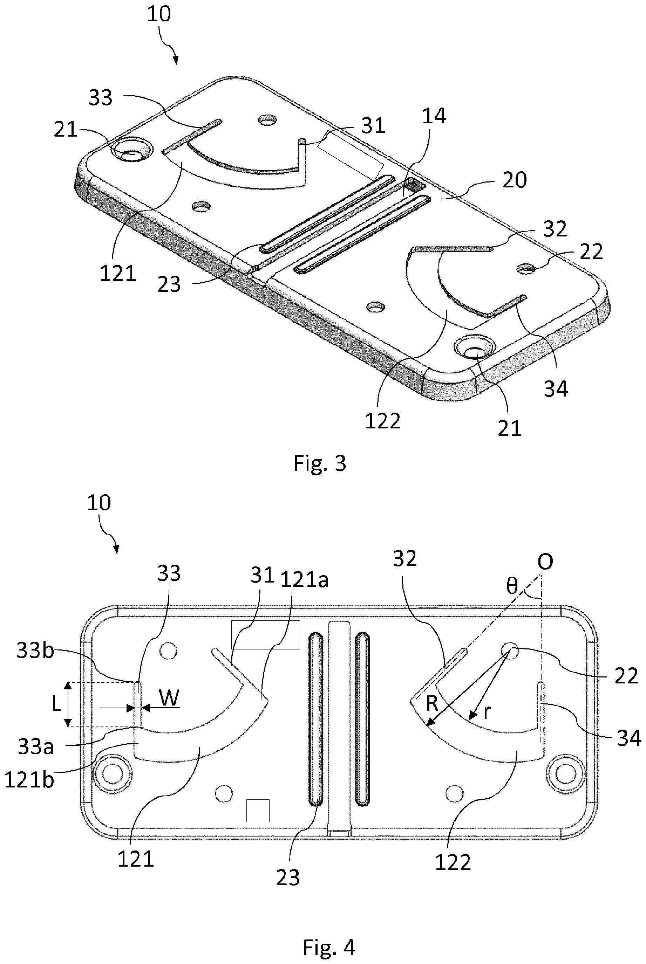

In the below description of presently preferred embodiments of the invention, it is thus foreseen that a locking assembly 10 according to the invention is mounted in a roof window corresponding to the prior art roof window 1' such that the locking assembly 10 is mounted on the sash 3' to replace the prior art locking assembly 10' and to interact with the striking plate on the frame 2' in substantially the manner described in the above. Parts of the lock mechanism are not indicated in Figs 3 and 4 for reasons of ease of readability.

Thus, according to the invention the locking assembly 10 is provided with at least one deformation section configured to allow the locking assembly 10 to undergo plastic deformation when the roof window is subjected to a sudden, severe load change such as an impact.

In the embodiment shown, a total of four deformation sections is provided in the lock casing 20 of the locking assembly 10. However, the invention is applicable to only a single deformation section, just as two, three or more than four deformation sections are conceivable as well. Here, each deformation section includes one deformation slit 31, 32, 33, 34 adjoining an arcuate track 121, 122 in the lock casing 20.

In the inventive locking assembly 10, two arcuate tracks 121, 122 are provided in the lock casing 20. In principle, the arcuate tracks 121, 122 may be of any configuration and have any suitable general dimensions, either the same as or different from the prior art counterparts 12'. Here, each arcuate track 121, 122 has an outer radius R and an inner radius r measured from an aperture 22 for a lock mechanism of the locking assembly 10 and extends over an arc length with a central angle of approximately 45°.

In addition to the arcuate tracks 121, 122 and the deformation slits 31, 32, 33, 34, the lock casing 20 is provided with two mounting holes 21 for fastening the lock casing 20 to the sash of the roof window and four apertures for the lock mechanism, here represented by the above-mentioned aperture 22 located in proximity to right-hand arcuate track 122. As in the prior art, a straight track 14 is provided to receive the not-shown actuator slide, surrounded by a reinforcing rib 23 on either side.

As indicated, the first deformation slit 31 is provided adjoining a first end 121a of the left-hand arcuate track 121. Correspondingly, the second deformation slit 32 is provided adjoining the counterpart first end of the right-hand arcuate track 122.

In one conceivable configuration, the first and second deformation slits 31, 32 could form the deformation sections of the lock assembly 10. Possibly, only one deformation slit is present. However, in the embodiment shown, two deformation slits 31, 33; 32, 34 are provided adjoining the first end 121a and a second end 121b, respectively, of a respective one of said two arcuate tracks 121, 122.

Although any shape of the deformation slit or slits could in principle fulfil the requirements of allowing deformation of the lock casing of the lock assembly, just as not all deformation slits are necessarily of similar configuration, each deformation slit 31, 32, 33, 34 is here substantially linear and has a predefined length L and a predefined width W.

The exact measures of the dimensions of the deformation slits depend on a number of parameters, including the overall dimensions of the lock casing 20. Here, the predefined length L of each deformation slit 31, 32, 33, 34 is in the range 5 to 15 mm, here specifically about 10 mm. The predefined width W of each deformation slit 31, 32, 33, 34 is in the range 1 to 3 mm, preferably 1.5 to 2 mm, here specifically about 1.75 mm. In comparison, the overall dimensions of the lock casing 20 are about 130 mm by 59 mm, with a material thickness of about 1.5 mm. Typically, the lock casing 20 and the other parts of the locking assembly 10 are made of steel and pressed into shape by any suitable technique such that the height of the lock casing 20 is sufficient to accommodate the lock mechanism, here about 6.5 mm. The radii, viz. outer radius R is about 28 mm and inner radius r is about 21 mm, of the arcuate tracks 121 and 122 allow for movement of the pawl elements to attain the positions as described in the above.

In the embodiment shown, the deformation slits 31, 33; 32, 34 at a respective one of said two arcuate tracks 121, 122 extend at an angle Θ relative to each other substantially corresponding to the central angle of approximately 45° of the arcuate track 121, 122 in question, thus ending in origin point O.

The invention is not limited to the embodiments shown and described in the above, but various modifications and combinations may be carried out within the limits defined by the claims.

### List of reference numerals

### Prior art

- 1': roof window
- 2': frame
- 3': sash
- 4': operating device
- 5': mounting bracket
- 6': hinge
- 10': locking assembly
- 11': pawl element
- 12': arcuate track
- 13': actuator slide
- 14': straight track
- 15': operator arm
- 16': operator hinge
- 17': lock mechanism
- 20': casing

### Embodiments of the invention

- 10: locking assembly
- 121: arcuate track
- 121a: first end of arcuate track
- 121b: second end of arcuate track
- 122: arcuate track
- 14: straight track
- 20: casing
- 21: mounting hole
- 22: aperture for lock mechanism
- 23: reinforcing rib
- 31: first deformation slit
- 32: second deformation slit
- 33: third deformation slit
- 33a: first end
- 33b: second end
- 34: fourth deformation slit
- L: length
- W: width
- O: origin point
- Θ: angle
- R: outer radius
- r: inner radius

## Claims

1. A roof window (1') comprising a frame (2'), a sash (3'), and a locking assembly (10) connecting the sash (3') with the frame (2'),
in which the locking assembly (10) is provided with at least one deformation section (31, 32, 33, 34) configured to allow the locking assembly (10) to undergo plastic deformation when the roof window is subjected to a sudden, severe load change such as an impact,
said at least one deformation section (31, 32, 33, 34) being provided in a lock casing (20) of the locking assembly (10).
**characterised in that**
said at least one deformation section includes at least one deformation slit (31, 32, 33, 34) adjoining an arcuate track (121, 122) in the lock casing (20).

2. A roof window according to claim 1, wherein two arcuate tracks (121, 122) are provided and at least one deformation slit (31, 32) is provided adjoining a first end (121a) of a respective one of said two arcuate tracks (121, 122).

3. A roof window according to claim 2, wherein two deformation slits (31, 33; 32, 34) are provided adjoining a first end (121a) and a second end (121b), respectively, of a respective one of said two arcuate tracks (121, 122).

4. A roof window according to any one of claims 1 to 3, wherein each deformation slit (31, 32, 33, 34) is substantially linear and has a predefined length (L) and a predefined width (W).

5. A roof window according to claim 4, wherein the predefined length (L) of each deformation slit (31, 32, 33, 34) is in the range 5 to 15 mm, preferably about 10 mm.

6. A roof window according to claim 5, wherein the predefined width (W) of each deformation slit (31, 32, 33, 34) is in the range 1 to 3 mm, preferably 1.5 to 2 mm, more preferably about 1.75 mm.

7. A roof window according to anyone of claims 1 to 6, wherein each arcuate track (121, 122) has an outer radius (R) and an inner radius (r) measured from an aperture (22) for a lock mechanism of the locking assembly (10) and extends over an arc length with a central angle of approximately 45°.

8. A roof window according to any one of claims 3 to 6 and claim wherein the deformation slits (31, 33; 32, 34) at a respective one of said two arcuate tracks (121, 122) extend at an angle (Θ) relative to each other substantially corresponding to the central angle of approximately 45° of the arcuate track (121, 122) in question.

## Patentansprüche

1. Dachfenster (1'), umfassend einen Blendrahmen (2'), einen Flügelrahmen (3') und eine Verriegelungsanordnung (10), die den Flügelrahmen (3') mit dem Blendrahmen (2') verbindet,
wobei die Verriegelungsanordnung (10) mit mindestens einem Deformationsabschnitt (31, 32, 33, 34) versehen ist, der dazu ausgestaltet ist, der Verriegelungsanordnung (10) eine plastische Deformation zu gestatten, wenn das Dachfenster mit einem plötzlichen, großen Lastwechsel wie einem Aufprall beaufschlagt wird,
wobei der mindestens eine Deformationsabschnitt (31, 32, 33, 34) in einem Schlossgehäuse (20) der Verriegelungsanordnung (10) vorgesehen ist,
**dadurch gekennzeichnet, dass**
der mindestens eine Deformationsabschnitt mindestens einen Deformationsschlitz (31, 32, 33, 34) aufweist, der an eine bogenförmige Bahn (121, 122) in dem Schlossgehäuse (20) angrenzt.

2. Dachfenster nach Anspruch 1, wobei zwei bogenförmige Bahnen (121, 122) vorgesehen sind und mindestens ein Deformationsschlitz (31, 32) vorgesehen ist, der an ein erstes Ende (121a) einer jeweiligen der beiden bogenförmigen Bahnen (121, 122) angrenzt.

3. Dachfenster nach Anspruch 2, wobei zwei Deformationsschlitze (31, 33; 32, 34) vorgesehen sind, die an ein erstes Ende (121a) bzw. ein zweites Ende (121b) einer jeweiligen der beiden bogenförmigen Bahnen (121, 122) angrenzen.

4. Dachfenster nach einem der Ansprüche 1 bis 3, wobei jeder Deformationsschlitz (31, 32, 33, 34) im Wesentlichen linear ist und eine vordefinierte Länge (L) und eine vordefinierte Breite (W) hat.

5. Dachfenster nach Anspruch 4, wobei die vordefinierte Länge (L) jedes Deformationsschlitzes (31, 32, 33, 34) im Bereich von 5 bis 15 mm liegt und vorzugsweise ungefähr 10 mm beträgt.

6. Dachfenster nach Anspruch 5, wobei die vordefinierte Breite (W) jedes Deformationsschlitzes (31, 32, 33, 34) im Bereich von 1 bis 3 mm liegt, vorzugsweise 1,5 bis 2 mm und stärker bevorzugt ungefähr 1,75 mm beträgt.

7. Dachfenster nach einem der Ansprüche 1 bis 6, wobei jede bogenförmige Bahn (121, 122) einen äußeren Radius (R) und einen inneren Radius (r) gemessen von einer Öffnung (22) für einen Schlossmechanismus der Verriegelungsanordnung (10) hat und sich über eine Bogenlänge mit einem mittleren Winkel von ungefähr 45° erstreckt.

8. Dachfenster nach einem der Ansprüche 3 bis 6 und Anspruch 7, wobei sich die Deformationsschlitze (31, 33; 32, 34) an einer jeweiligen der beiden bogenförmigen Bahnen (121, 122) in einem Winkel (θ) zueinander erstrecken, der dem mittleren Winkel von ungefähr 45° der betreffenden bogenförmigen Bahn (121, 122) im Wesentlichen entspricht.

## Revendications

1. Fenêtre de toit (1') comprenant un cadre (2'), un châssis (3') et un ensemble de verrouillage (10) reliant le châssis (3') au cadre (2'),
dans laquelle l'ensemble de verrouillage (10) est pourvu d'au moins une section de déformation (31, 32, 33, 34) configurée pour permettre à l'ensemble de verrouillage (10) de subir une déformation plastique lorsque la fenêtre de toit est soumise à un changement de charge soudain et puissant tel qu'un impact,
ladite au moins une section de déformation (31, 32, 33, 34) étant prévue dans un boîtier de verrou (20) de l'ensemble de verrouillage (10),
**caractérisée en ce que**
ladite au moins une section de déformation comporte au moins une fente de déformation (31, 32, 33, 34) adjacente à une glissière arquée (121, 122) dans le boîtier de verrou (20).

2. Fenêtre de toit selon la revendication 1, dans laquelle deux glissières arquées (121, 122) sont prévues et au moins une fente de déformation (31, 32) est prévue en position adjacente à une première extrémité (121a) de l'une respective desdites deux glissières arquées (121, 122).

3. Fenêtre de toit selon la revendication 2, dans laquelle deux fentes de déformation (31, 33 ; 32, 34) sont prévues en position adjacente à une première extrémité (121a) et à une deuxième extrémité (121b), respectivement, de l'une respective desdites deux glissières arquées (121, 122) .

4. Fenêtre de toit selon l'une quelconque des revendications 1 à 3, dans laquelle chaque fente de déformation (31, 32, 33, 34) est sensiblement linéaire et présente une longueur prédéfinie (L) et une largeur prédéfinie (W).

5. Fenêtre de toit selon la revendication 4, dans laquelle la longueur prédéfinie (L) de chaque fente de déformation (31, 32, 33, 34) mesure entre 5 et 15 mm, de préférence environ 10 mm.

6. Fenêtre de toit selon la revendication 5, dans laquelle la largeur prédéfinie (W) de chaque fente de déformation (31, 32, 33, 34) mesure entre 1 et 3 mm, de préférence entre 1,5 et 2 mm, plus préférablement environ 1,75 mm.

7. Fenêtre de toit selon l'une quelconque des revendications 1 à 6, dans laquelle chaque glissière arquée (121, 122) présente un rayon extérieur (R) et un rayon intérieur (r) mesurés à partir d'une ouverture (22) pour un mécanisme de verrou de l'ensemble de verrouillage (10) et s'étend sur une longueur d'arc ayant un angle central d'environ 45°.

8. Fenêtre de toit selon l'une quelconque des revendications 3 à 6 et selon la revendication 7, dans laquelle les fentes de déformation (31, 33 ; 32, 34) au niveau de l'une respectives desdites deux glissières arquées (121, 122) s'étendent suivant un angle (θ) l'une par rapport à l'autre qui correspond sensiblement à l'angle central d'environ 45° de la glissière arquée (121, 122) en question.
